# EUROPÄISCHE PATENTANMELDUNG

(11) **EP 3 382 612 A1**
(43) Veröffentlichungstag der Anmeldung: **03.10.2018**
(21) Anmeldenummer: 17164201.0
(22) Anmeldetag: 31.03.2017
(51) Int. Cl.: G06Q 10/00

(54) **VERFAHREN UND VORRICHTUNG ZUM RECHNERGESTÜTZTEN BEREITSTELLEN SICHERHEITSGESCHÜTZTER SATELLITENNAVIGATIONSDATENSÄTZE**

(71) Anmelder: Siemens Aktiengesellschaft, 80333 München (DE)
(72) Erfinder: Falk, Rainer, 85586 Poing (DE)

(57) **Zusammenfassung**

Die Erfindung betrifft ein Verfahren zum rechnergestützten Bereitstellen von sicherheitsgeschützten Satellitennavigationsdatensätzen mit folgenden Verfahrensschritten. Erfassen von ersten Satellitennavigationsdatensätzen von einem oder mehreren Datenquellen. Speichern von Transaktionen, wobei die Transaktionen die ersten Satellitennavigationsdatensätze umfassen und/oder erste Prüfsummen für die ersten Satellitennavigationsdatensätze berechnet werden und die Transaktionen die ersten Prüfsummen umfassen. Erstellen der sicherheitsgeschützten Satellitennavigationsdatensätze durch ein Erzeugen von Gliedern einer Blockkette, wobei die Glieder jeweils mindestens eine der Transaktionen umfassen und die Glieder miteinander zu der Blockkette verkettet werden.

## Beschreibung

Die Erfindung bezieht sich auf ein Verfahren und eine Vorrichtung zum rechnergestützten Bereitstellen sicherheitsgeschützter Satellitennavigationsdatensätze.

Die Technologie von Blockketten (engl. Blockchains) bzw. "Distributed Ledgers" ist aktuell ein intensiv diskutierte Technologie. Neben Anwendungen für dezentrale Bezahlsysteme (z.B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Eine Aufgabe der vorliegenden Erfindung ist es, Verfahren und eine Vorrichtungen zum rechnergestützten Bereitstellen sicherheitsgeschützter Satellitennavigationsdatensätze bereitzustellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß eines ersten Aspekts betrifft die Verfahren zum rechnergestützten Bereitstellen von sicherheitsgeschützten Satellitennavigationsdatensätzen mit folgenden Verfahrensschritten:
- Erfassen von ersten Satellitennavigationsdatensätzen von einer oder mehreren Datenquellen;
- Speichern (120) von Transaktionen, wobei
   - die Transaktionen die ersten Satellitennavigationsdatensätze umfassen und/oder
   - erste Prüfsummen für die ersten Satellitennavigationsdatensätze berechnet werden und die Transaktionen die ersten Prüfsummen umfassen;
- Erstellen (130) der sicherheitsgeschützten Satellitennavigationsdatensätze durch ein Erzeugen von Gliedern einer Blockkette, wobei
   - die Glieder jeweils mindestens eine der Transaktionen umfassen,
   - die Glieder miteinander zu der Blockkette verkettet werden.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen" kann im Zusammenhang mit der Erfindung beispielsweise ein Laden oder ein Speichern, beispielsweise der ersten Satellitennavigationsdatensätze und/oder der sicherheitsgeschützten Satellitennavigationsdatensätze, auf oder von einem Speichermodul verstanden werden.

Unter einer "Prüfsumme", beispielsweise die erste Prüfsumme, eine zweite Prüfsumme, eine Knoten-Prüfsumme, eine Transaktions-Prüfsumme oder eine Verkettungsprüfsumme, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine der Transaktionen und/oder einem Glied-Header gebildet oder berechnet werden. Bei einer Prüfsumme kann es sich insbesondere um eine Prüfsumme/n oder Hashwert/e eines Hash-Baumes (z. B. Merkle-Baum, Patricia-Baum) handeln. Weiterhin kann darunter insbesondere auch eine digitale Signatur oder ein kryptographischer Nachrichtenauthentisierungscode verstanden werden.

Unter einer "ersten Prüfsumme" kann im Zusammenhang mit der Erfindung eine Prüfsumme verstanden werden, die beispielsweise über die Daten(sätze) einer Transaktion berechnet wird. Anstelle der Daten, z. B. der ausgewählte Teil der Daten, kann beispielsweise eine Transaktion nur die Prüfsumme - genauer die entsprechende zugehörige erste Prüfsumme - für diese Daten umfassen. Die entsprechenden Daten können beispielsweise dann in einer weiteren Transaktion eines weiteren Gliedes bereitgestellt werden. Es ist beispielsweise aber auch denkbar, dass diese Daten über einen anderen Kommunikationskanal bereitgestellt werden. Ein Knoten kann dann beispielsweise die Integrität/Authentizität der Daten mittels der ersten Prüfsumme aus der Blockkette prüfen. Auch kann beispielsweise zusätzlich zu der ersten Prüfsumme eine Zusatzdatensatz in den Transaktionen abgelegt sein, der insbesondere einen Speicherort angibt, wo die Daten abgerufen werden können. Das ist insbesondere dahingehend vorteilhaft um eine Datengröße der Blockkette möglichst gering zu halten. Zusätzlich kann beispielsweise eine Berechnung einer Transaktions-Prüfsumme beschleunigt werden, da hier bereits Prüfsummen vorliegen und diese gleich als Blätter z. B. eines Merkle-Baumes verwendet werden können. Dabei kann insbesondere darauf verzichtet werden, eine separate Prüfsumme über den Zusatzdatensatz zu bilden.

Unter "Transaktions-Prüfsumme" kann im Zusammenhang mit der Erfindung eine Prüfsumme verstanden werden, die insbesondere über die jeweiligen Transaktionen eines der jeweiligen Glieder und/oder vorhergehende Glied/Vorgänger-Glied eines Gliedes der Blockkette gebildet werden. Zusätzlich oder alternativ kann die Transaktions-Prüfsumme insbesondere auch über Transaktionen eines vorhergehenden Gliedes/Vorgänger-Gliedes des Gliedes gebildet worden sein. Die Transaktions-Prüfsumme kann dabei insbesondere auch mittels eines Hash-Baumes, beispielsweise einem Merkle-Baum [1] oder einem Patricia-Baum, realisiert werden, wobei die Transaktions-Prüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert, wobei insbesondere die weiteren Prüfsummen Blätter im Merkle-Baum bzw. Patricia-Baum sind. Die Transaktions-Prüfsumme kann beispielsweise die Transaktionen absichern, indem die Wurzel-Prüfsumme aus den weiteren Prüfsummen gebildet wird. Die Transaktions-Prüfsumme kann insbesondere für Transaktionen eines ersten Gliedes der Glieder berechnet werden. Insbesondere kann eine solche Transaktions-Prüfsumme in ein nachfolgendes Glied des ersten Gliedes eingehen um dieses nachfolgende Glied beispielsweise mit ihren vorhergehenden Gliedern (z. B. das erste Glied) zu verketten und insbesondere damit eine Integrität der Blockkette prüfbar zu machen.

Unter einer "Verkettungsprüfsumme" kann im Zusammenhang mit der Erfindung eine Prüfsumme verstanden werden, die insbesondere für ein jeweiliges Glied der Blockkette das vorhergehende Glied der Blockkette angibt bzw. referenziert (in der Fachsprache insbesondere häufig als "previous block hash" bezeichnet) [1]. Als Verkettungsprüfsumme kann beispielsweise die Transaktions-Prüfsumme eines Gliedes verwendet werden, um ein neues Glied mit einem Glied der Blockkette zu verketten. Es ist beispielsweise aber auch möglich, dass eine Prüfsumme über einen Header des vorhergehenden Gliedes oder über das gesamte vorhergehende Glied gebildet wird und als Verkettungsprüfsumme verwendet wird. Ein jeweiliges Glied der Blockkette umfasst vorzugsweise jeweils eine Verkettungsprüfsumme, die für ein vorhergehendes Glied des jeweiligen Gliedes berechnet wurde.

Unter "Verketten der/von Gliedern einer Blockkette" kann im Zusammenhang mit der Erfindung beispielsweise verstanden werden, dass Glieder jeweils eine Information (z. B. Verkettungsprüfsumme) umfassen, die auf ein anderes Glied oder mehrere andere Glieder der Blockkette verweisen bzw. diese referenzieren [1].

Unter "Einfügen in die Blockkette" und dergleichen kann im Zusammenhang mit der Erfindung beispielsweise verstanden werden, dass insbesondere eine Transaktion bzw. die Transaktionen oder ein Glied mit seinen Transaktionen an einen oder mehrere Knoten einer Blockkette übermittelt werden. Werden diese Transaktionen beispielsweise erfolgreich validiert (z. B. durch den/die Knoten), werden diese Transaktionen insbesondere als neues Glied/er mit mindestens einem vorhandenen Glied der Blockkette verkettet [1]. Insbesondere kann dieses Validieren und/oder Verketten durch einen vertrauenswürdigen Knoten (z. B. einem Mining Node oder einer Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Glied hinterlegen, um insbesondere eine Identifizierbarkeit des Erstellers des Gliedes zu ermöglichen und/oder eine Identifizierbarkeit des Knotens zu ermöglichen. Dabei gibt diese Knoten-Prüfsumme an, welcher Knoten beispielsweise das entsprechende Glied mit mindestens einem anderen Glied der Blockkette verkettet hat.

Unter "Transaktion" bzw. "Transaktionen" können im Zusammenhang mit der Erfindung beispielsweise ein Smart-Contract, eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Gliedes einer Bockkette (engl. Blockchain) verstanden werden. Ein Transaktionsdatensatz bzw. eine Transkation kann einen Programmcode umfassen, der insbesondere einen Smart Contract realisiert. Unter einem "Transaktionsdatensatz" können im Zusammenhang mit der Erfindung beispielsweise auch eine Transkation eines Gliedes einer Blockkette verstanden werden.

Unter einem "Programmcode" können im Zusammenhang mit der Erfindung beispielsweise Steuerungsbefehle, Programmbefehle, oder Steuerungsanweisungen verstanden werden, die insbesondere in einer Transaktion gespeichert sind.

Unter einem "Smart Contract" kann im Zusammenhang mit der Erfindung beispielsweise ein ausführbarer Programmcode verstanden werden. Der Programmcode ist insbesondere auf einer virtuellen Maschine ausführbar.

Unter "Speichern von Transaktionen" kann im Zusammenhang mit der Erfindung beispielsweise ein Speichern von Daten (z. B. des ausgewählten Teils der Daten usw.) in einer Transaktion bzw. in einem Transaktionsdatensatz verstanden werden. Es ist beispielsweise auch denkbar, dass nicht die Daten direkt gespeichert werden, sondern nur eine Prüfsumme (z. B. die erste Prüfsumme) der entsprechenden Daten in der Transaktion gespeichert werden.

Unter "Proof-of-Work-Nachweis" kann im Zusammenhang mit der Erfindung beispielsweise ein Lösen einer rechenintensiven Aufgabe verstanden werden, die insbesondere abhängig vom Glied-Inhalt/Inhalt eines ersten Transaktionsdatensatzes zu lösen ist [1]. Eine solche rechenintensive Aufgabe wird beispielsweise auch als kryptographisches Puzzle bezeichnet.

Unter "Glied" kann im Zusammenhang mit der Erfindung beispielsweise ein Block einer Blockkette verstanden werden, das insbesondere als Datenstruktur realisiert ist und vorzugsweise jeweils eine der Transaktionen oder mehrere der Transaktionen umfasst. Ein Glied kann beispielsweise Angaben zur Größe (Datengröße in Byte) des Gliedes, einen Glied-Header (engl. Blockheader), einen Transaktionszähler und eine oder mehrere Transaktionen umfassen [1]. Der Glied-Header kann beispielsweise eine Version, eine Verkettungsprüfsumme, eine Transkations-Prüfsumme, einen Zeitstempel, einen Proof-of-Work Nachweis und eine Nonce (Einmalwert, Zufallswert oder Zähler der für den Proof-of-Work Nachweis verwendet wird) umfassen [1].

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehender Glieder eines (ersten) Gliedes der Blockkette" kann im Zusammenhang mit der Erfindung beispielsweise nur das Glied der Blockkette verstanden werden, das insbesondere einem (ersten) Glied direkt vorhergeht. Alternativ können unter "vorhergehender Glieder eines (ersten) Gliedes der Blockkette" insbesondere auch alle Glieder der Blockkette verstanden werden, die dem ersten Glied vorhergehen. Hierdurch kann beispielsweise die Verkettungsprüfsumme oder die Transaktions-Prüfsumme insbesondere nur über das dem ersten Glied direkt vorhergehende Glied (bzw. deren Transaktionen) oder über alle dem ersten Glied vorhergehenden Glieder (bzw. deren Transaktionen) gebildet werden.

Unter einem "Blockketten-Knoten", "Knoten", "Knoten einer Blockkette" und dergleichen, können im Zusammenhang mit der Erfindung beispielsweise Geräte (z. B. Feldgeräte), Rechner, Smart-Phones, Clients oder Teilnehmer verstanden werden, die Operationen mit einer Blockkette durchführen [1]. Solche Knoten können beispielsweise Transaktionen einer Blockkette bzw. deren Glieder ausführen oder neue Glieder mit neuen Transaktionen in die Blockkette mittels neuer Glieder einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten der über zusätzliche Sicherheitsmaßnahmen verfügt (z. B. Firewalls, Zugangsbeschränkungen zum Knoten oder ähnliches) handeln, um eine Manipulation des Knotens zu verhindern. Alternativ oder zusätzlich kann beispielsweise ein vertrauenswürdiger Knoten beim Verketten eines neuen Gliedes mit der Blockkette, eine zweite Prüfsumme (z. B. eine digitale Signatur oder ein Zertifikat) in dem neuen Glied speichern. Damit kann insbesondere ein Nachweis bereitgestellt werden, der angibt, dass das Glied von einem bestimmten Knoten eingefügt wurde bzw. seine Herkunft angibt.

Unter einem "Rechner" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer der Blockkette sind (also keine Operationen mit der Blockkette durchführen oder diese nur abfragen, ohne jedoch Transaktionen durchzuführen, Glieder einfügen oder Proof-of-Work-Nachweise berechnen), verstanden werden. Alternativ kann insbesondere auch unter einem Rechner ein Knoten einer Blockkette verstanden werden.

Unter "Datenquelle" kann im Zusammenhang mit der Erfindung beispielsweise Sensoren verstanden werden, die beispielsweise Daten bereitstellen, um einen Satellitennavigationsdatensatz zu generieren. Unter Datenquelle/n können beispielsweise auch Referenz-Empfänger von ersten Satellitennavigationsdatensätzen verstanden werden, die beispielsweise ebenfalls als Knoten einer/der Blockkette realisiert sind.

Unter "Datengeber" kann im Zusammenhang mit der Erfindung beispielsweise ein Knoten einer Blockkette verstanden werden.

Unter "Satellitennavigationsdatensatz" kann im Zusammenhang mit der Erfindung beispielsweise ein Datensatz verstanden werden, der insbesondere Informationen zur Bestimmung einer Position (z. B. GPS Daten) umfasst.

Das Verfahren ist dahingehend vorteilhaft um insbesondere durch eine dezentrale Blockketten-Infrastruktur vertrauenswürdige/sicherheitsgeschützte Satellitennavigationsdatensätze bereitzustellen. Insbesondere werden die sicherheitsgeschützten Satellitennavigationsdatensätze durch die Blockkette manipulationsgeschützt und können einfach zugänglich gemacht werden. Insbesondere können durch die Verwendung einer Blockkette ein Satellitennavigationsdatensatz (z. B. Navigationsdaten und Statusdaten) manipulationsgeschützt bereitgestellt werden. Dazu kann insbesondere eine bestehende Blockketten-Plattform verwendet werden, sodass die Lösung mit wenig Aufwand realisiert werden kann.

Bei einer ersten Ausführungsform des Verfahrens werden die Glieder über eine kryptographische Hashfunktion miteinander verkettet.

Bei einer weiteren Ausführungsform des Verfahrens werden die sicherheitsgeschützten Satellitennavigationsdatensätze von einem oder mehreren Knoten bereitgestellt.

Das Verfahren ist dahingehend vorteilhaft um insbesondere die sicherheitsgeschützten Satellitennavigationsdatensätze durch mehrere Knoten bereitzustellen und beispielsweise eine redundante Verfügbarkeit der sicherheitsgeschützten Satellitennavigationsdatensätze zu ermöglichen.

Bei einer weiteren Ausführungsform des Verfahrens werden die sicherheitsgeschützten Satellitennavigationsdatensätze über das Internet, ein Mobilfunknetz, als ein Satellitensignal, einem Broadcastnetzwerk, einem Multicastnetzwerk, mittels einem Broadcastprotokoll, einem Multicastprotokoll oder einer Kombination davon übermittelt.

Das Verfahren ist dahingehend vorteilhaft um insbesondere das Bereitstellen/Übermitteln über unterschiedliche Kommunikationswege zu ermöglichen.

Bei einer weiteren Ausführungsform des Verfahrens sind der eine oder die mehreren Knoten oder ein Teil der mehreren Knoten vertrauenswürdige Knoten.

Das Verfahren ist dahingehend vorteilhaft um insbesondere eine hohe Vertrauenswürdigkeit/Sicherheit der sicherheitsgeschützten Satellitennavigationsdatensätze zu erreichen.

Bei einer weiteren Ausführungsform des Verfahrens werden die sicherheitsgeschützten Satellitennavigationsdatensätze an mindestens einen Empfänger übermittelt.

Das Verfahren ist dahingehend vorteilhaft um insbesondere sicherheitsgeschützte Satellitennavigationsdatensätze einem Empfänger bereitzustellen.

Bei einer weiteren Ausführungsform des Verfahrens ermittelt der Empfänger abhängig von den empfangenen sicherheitsgeschützten Satellitennavigationsdatensätzen eine Positionsinformation und/oder eine Statusinformation.

Das Verfahren ist dahingehend vorteilhaft damit insbesondere der Empfänger anhand der sicherheitsgeschützten Satellitennavigationsdatensätze die Position(sinformation) (z. B. eine geographische Position) und/oder die Statusinformation ermitteln kann.

Bei einer weiteren Ausführungsform des Verfahrens werden die sicherheitsgeschützten Satellitennavigationsdatensätze innerhalb eines vorgegebenen Zeitintervalls oder entsprechend eines vorgegebenen Zeitrasters bereitgestellt.

Das Verfahren ist dahingehend vorteilhaft damit insbesondere die sicherheitsgeschützten Satellitennavigationsdatensätze durch ein vorgegebenes Zeitmuster Empfängern bereitgestellt werden können.

Gemäß eines weiteren Aspekts betrifft die Erfindung ein rechnergestütztes Verfahren zum Ermitteln einer Position mit den Verfahrensschritten:
- Empfangen oder Abrufen mindestens eines sicherheitsgeschützten Satellitennavigationsdatensatzes nach einem der Ansprüche 1-8 (also das Verfahren zum Bereitstellen sicherheitsgeschützter Satellitennavigationsdatensätze oder eine seiner Ausführungsformen), wobei das Glied einer Blockkette eine Transaktion umfasst, welche den sicherheitsgeschützte Satellitennavigationsdatensatz aufweist;
- Ermitteln der Position anhand des sicherheitsgeschützten Satellitennavigationsdatensatzes.

Gemäß eines weiteren Aspekts betrifft die Erfindung einen Datengeber, beispielsweise in Form eines Knotens, zum rechnergestützten Bereitstellen von sicherheitsgeschützten Satellitennavigationsdatensätzen aufweisend:
- eine oder mehrere Datenquellen;
- ein Erfassungsmodul zum Erfassen von ersten Satellitennavigationsdatensätzen von der einen oder den mehreren Datenquellen;
- ein Speichermodul zum Speichern von Transaktionen, wobei
   - die Transaktionen die ersten Satellitennavigationsdatensätze umfassen und/oder
   - erste Prüfsummen für die ersten Satellitennavigationsdatensätze berechnet werden und die Transaktionen die ersten Prüfsummen umfassen;
- ein Erstellungsmodul zum Erstellen der sicherheitsgeschützten Satellitennavigationsdatensätze durch ein Erzeugen von Gliedern einer Blockkette, wobei
   - die Glieder jeweils mindestens eine der Transaktionen umfassen,
   - die Glieder miteinander zu der Blockkette verkettet werden.

Bei einer weiteren Ausführungsform der Vorrichtung umfasst der Datengeber ein Übermittlungsmodul zum Übermitteln der sicherheitsgeschützten Satellitennavigationsdatensätze.

Das Verfahren ist dahingehend vorteilhaft um insbesondere die sicherheitsgeschützten Satellitennavigationsdatensätze an Knoten oder Rechner außerhalb der Blockkette zu übermitteln oder die sicherheitsgeschützten Satellitennavigationsdatensätze von dem Datengeber oder Knoten abzufragen. Das Übermitteln kann beispielsweise verbindungsorientiert (z. B. TCP/IP basierend), verbindungslos (z. B. UDP basierend) oder broadcast/multicast-basierend erfolgen.

Bei einer weiteren Ausführungsform des Datengebers umfasst der Datengeber zumindest ein weiteres Modul oder mehrere weitere Module zur Durchführung des erfindungsgemäßen Verfahrens (oder einer seiner Ausführungsformen) zum rechnergestützten Bereitstellen der sicherheitsgeschützten Satellitennavigationsdatensätze.

Gemäß eines weiteren Aspekts betrifft die Erfindung eine Vorrichtung zum rechnergestützten Ermitteln einer Position aufweisend:
- ein Kommunikationsmodul zum Empfangen oder Abrufen mindestens eines sicherheitsgeschützten Satellitennavigationsdatensatzes nach einem der Ansprüche 1-8, wobei das Glied einer Blockkette eine Transaktion umfasst, welche den sicherheitsgeschützten Satellitennavigationsdatensatz aufweist;
- ein Ermittlungsmodul zum Ermitteln der Position anhand des sicherheitsgeschützten Satellitennavigationsdatensatzes.

Bei einer weiteren Ausführungsform der Vorrichtung umfasst die Vorrichtung zumindest ein weiteres Modul oder mehrere weitere Module zur Durchführung des erfindungsgemäßen Verfahrens (oder einer seiner Ausführungsformen) zum Ermitteln einer Position.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Vorrichtung oder Datengeber erstellt werden.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Vorrichtung oder den erfindungsgemäßen Datengeber erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm;
- Fig. 2: ein zweites Ausführungsbeispiel der Erfindung als ein Ablaufdiagramm;
- Fig. 3: ein drittes Ausführungsbeispiel der Erfindung;
- Fig. 4: ein viertes Ausführungsbeispiel der Erfindung;
- Fig. 5: ein fünftes Ausführungsbeispiel der Erfindung als Vorrichtung;
- Fig. 6: ein sechstes Ausführungsbeispiel der Erfindung;
- Fig. 7: ein siebtes Ausführungsbeispiel der Erfindung als Vorrichtung;
- Fig. 8: ein achtes Ausführungsbeispiel der Erfindung als Vorrichtung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

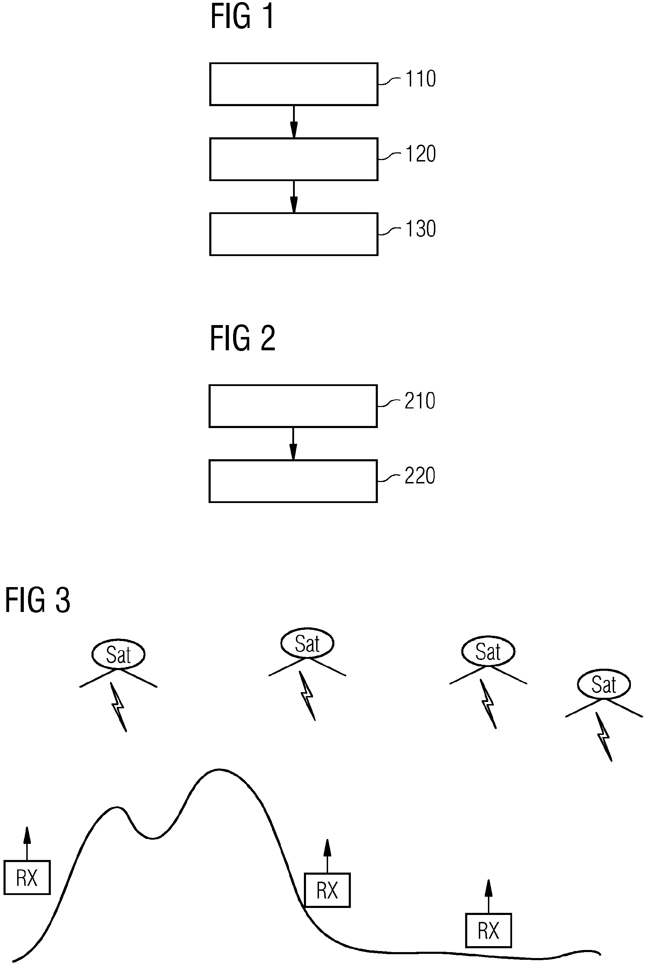

Die Fig. 1 zeigt ein erstes Ausführungsbeispiel der Erfindung als ein Ablaufdiagramm des erfindungsgemäßen Verfahrens zum rechnergestützten Bereitstellen von sicherheitsgeschützten Satellitennavigationsdatensätzen.

Das Verfahren umfasst einen ersten Verfahrensschritt zum Erfassen 110 von ersten Satellitennavigationsdatensätzen von einem oder mehreren Datenquellen. Die Satellitennavigationsdatensätze bzw. die Daten, die für deren Ermittlung notwendig sind, können entweder durch die Sensoren eines Satelliten (z. B. eines GPS-Satelliten) direkt erfasst werden oder ein Empfänger von Satellitennavigationsdatensätzen (z. B. ein Smart-Phone mit einem GPS-Modul) kann diese Daten von einer entsprechenden Hardwarekomponente (z. B. einem GPS-Modul) erfassen.

Das Verfahren umfasst einen zweiten Verfahrensschritt zum Speichern 120 von Transaktionen. Die Transaktionen umfassen dabei erste Satellitennavigationsdatensätze, wobei dies auf unterschiedliche Weise realisiert werden kann. Es ist denkbar, dass jeweils eine der Transaktionen eine oder mehrere der ersten Satellitennavigationsdatensätze umfasst - also in der entsprechenden Transaktion gespeichert werden. Alternativ können die Transaktionen erste Prüfsummen umfassen, die für die ersten Satellitennavigationsdatensätze berechnet wurden. In dieser Variante umfasst eine der Transaktionen eine oder mehrere erste Prüfsummen, die jeweils für einen der ersten Satellitennavigationsdatensätze berechnet wurden. Zusätzlich zu den ersten Prüfsummen können die Transaktionen beispielsweise eine Angabe (z. B. eine Internetadresse oder einen Speicherort auf einem Datenträger) umfassen, wo ein Rechner oder ein Knoten die entsprechenden ersten Satellitennavigationsdatensätze abrufen kann. Es ist beispielsweise auch denkbar, dass diese Angabe Rechnern und Knoten allgemein bekannt gemacht wird (z. B. über eine Rechnerkonfiguration oder Nutzerprofile).

Das Verfahren umfasst einen dritten Verfahrensschritt zum Erstellen 130 der sicherheitsgeschützten Satellitennavigationsdatensätze durch ein Erzeugen von Gliedern einer Blockkette, wobei die Glieder die Transkationen umfassen und die Glieder miteinander zur der Blockkette verkettet werden.

Hierdurch kann beispielsweise eine Vorrichtung (z. B. ein GPS-Satellit oder ein GPS-fähiges Mobiltelefon) die Transaktionen mit den sicherheitsgeschützten Satellitennavigationsdatensätze in die Blockkette einfügen bzw. die entsprechenden Glieder mit der/den Transaktionen mit mindestens einem Glied der Blockkette verketten.

Die Fig. 2 zeigt ein zweites Ausführungsbeispiel der Erfindung als ein Ablaufdiagramm des erfindungsgemäßen Verfahrens zum rechnergestützten Ermitteln einer Position.

Das Verfahren umfasst einen ersten Verfahrensschritt zum Empfangen oder Abrufen 210 mindestens eines sicherheitsgeschützten Satellitennavigationsdatensatzes nach einem der Ansprüche 1-8 (also das erfindungsgemäße Verfahren zum Bereitstellen sicherheitsgeschützter Satellitennavigationsdatensätze oder eine seiner Ausführungsformen), wobei das Glied einer Blockkette eine Transaktion umfasst, welche den sicherheitsgeschützten Satellitennavigationsdatensatz aufweist. Beispielsweise kann der Empfänger hierfür ein Kommunikationsmodul (z. B. ein W-Lan Modul, einen Ethernet-Adapter, ein GPS-Modul) umfassen.

Das Verfahren umfasst einen zweiten Verfahrensschritt zum Ermitteln 220 der Position anhand des sicherheitsgeschützten Satellitennavigationsdatensatzes.

Mit anderen Worten können mit der Erfindung, die beispielsweise in Fig. 1 und Fig. 2 erläutert wurde, insbesondere Satellitennavigationsdaten(sätze) (z. B. Almanach, Ephemeris, Korrekturdaten, Prüfsummen, Statusdaten, Monitoring-Daten, Satellitennavigationssignal-Pages) durch eine Blockkette sicherheitsgeschützt bereitgestellt werden.

Insbesondere können mit dem erfindungsgemäßen Verfahren Satellitennavigationsdatensätze oder eine erste Prüfsumme über diese in einer Transaktion einer Blockkette eingefügt sein bzw. mittels eines Gliedes mit der Blockkette verkettet sein.

Die sicherheitsgeschützten Satellitennavigationsdatensätze werden beispielsweise einem Satellitennavigationsempfänger oder einer Überwachungseinrichtung (z.B. einer Energienetzüberwachungszentrale, Leitstand) oder einem Steuergerät (z.B. einer Phasor Management Unit PMU, das der Energienetzüberwachung dient ) bereitgestellt (z.B. über Internet, Mobilfunk oder einen Satelliten).

Abhängig von der durch die Blockkette bereitgestellten sicherheitsgeschützten Satellitennavigationsdatensätzen bestimmt ein Satellitennavigationsempfänger eine Positionsinformation (PVT: position, velocity, time) oder eine Statusinformation (z.B. PVT gültig, PVT nutzbar für Safety of Life Anwendung).

Es können beispielsweise Empfängerparameter abhängig von einem der sicherheitsgeschützten Satellitennavigationsdatensätze angepasst werden, (z. B. Bandbreite einer Hochfrequenz-Eingangsstufe insbesondere zur Unterdrückung von Störsignalen).

Die sicherheitsgeschützten Satellitennavigationsdatensätzen können als "Blockchain Oracle" von einem vertrauenswürdigen Knoten in die Blockkette eingestellt werden.

In einer weiteren Variante werden die empfangenen ersten Satellitennavigationsdatensätze von einem Satellitennavigationsempfänger als Transaktion in die Blockkette eingestellt, indem dieser die sicherheitsgeschützten Satellitennavigationsdatensätze erzeugt.

Bei dieser Variante kann eine Vielzahl von Empfängern die jeweils empfangenen Satellitennavigationsdatensätze (bzw. deren zugehörigen ersten Prüfsummen) in die Blockkette einstellen. Dies hat den Vorteil, dass der durch eine Blockkette gegebene Integritätsschutz verwendet wird, um Satellitennavigationsdaten manipulationsgeschützt (sicherheitsgeschützt) bereitzustellen.

Die sicherheitsgeschützten Satellitennavigationsdatensätze bzw. deren Integritätsinformation (erste Prüfsumme) können beispielsweise über beliebige Datenübertragungswege bereitgestellt werden.

Im Gegensatz zu konventionellen NMA-Verfahren handelt es sich nicht um einen an die Übertragung durch einen Satellitennavigationssatelliten speziell angepassten Schutz. Es kann insbesondere eine allgemeine Blockketten-Plattform verwendet werden, die auch andere Transaktionen umfasst (z. B. Bezahlvorgänge wie Bitcoin).

Es kann beispielsweise auch eine spezielle Blockkette für ein oder mehrere Satellitennavigationsdienste realisiert werden, um die Größe der Glieder der Blockkette klein zu halten (diese Blockkette enthält vorzugsweise nur Information zu Navigationsnachrichten eines oder mehrerer Satellitennavigationssysteme).

In einer weiteren Variante kann das Zeitraster für Glieder mit Satellitennavigationsnachrichten angepasst werden (z.B. Stundenraster, 24h-Raster). Es können dabei mehrere Blockketten mit sicherheitsgeschützten Satellitennavigationsdatensätzen realisiert werden, die jeweils eine unterschiedliche Aktualisierungshäufigkeit bzw. jeweils unterschiedliche Zeitraster zur Übermittlung eines sicherheitsgeschützten Satellitennavigationsdatensatzes umfassen.

Die sicherheitsgeschützten Satellitennavigationsdatensätze können beispielsweise über Internet oder Mobilfunk bereitgestellt werden. Weiterhin ist es insbesondere möglich, dass die sicherheitsgeschützten Satellitennavigationsdatensätze als Satellitensignal, z.B. eines Telekommunikationssatelliten oder Satellitennavigationssatelliten, oder über ein Mobilfunknetz oder ein Broadcasting-System (z.B. DAB, DVB-T) ausgestrahlt wird.

Die Fig. 3 zeigt ein drittes Ausführungsbeispiel der Erfindung, in dem die Erfindung durch Satelliten und Empfängern realisiert wird.

Im Einzelnen zeigt die Fig. 3 eine vereinfachte Darstellung eines Satellitennavigationssystems (z. B. GPS-System) mit vier Satelliten Sat und mehreren Empfängern RX.

Die Satelliten senden ein Funksignal aus, das vom Empfängern RX empfangen wird.

Anhand des aufmodulierten PRN-Codes kann ein Empfänger RX die Laufzeit des Signals (Ranging Code) und damit eine Entfernungsinformation ermitteln. Wenn zumindest vier Signale empfangen werden, so kann einer der Empfänger RX die Position (X, Y, Z) und die Zeit (T) ermitteln.

Ein Empfänger kann beispielsweise auch nur die Zeit ermitteln. Dafür genügt dann das Signal eines Satelliten.

Zur Bestimmung der Positionsinformation werden Satellitenbahndaten und Korrekturdaten benötigt. Diese werden von den Satelliten in Form von Navigationsnachrichten ausgestrahlt.

Der entsprechende Empfänger RX erfasst dann einen ersten Satellitennavigationsdatensatz indem er Positionsinformation anhand der Satellitenbahndaten und der Korrekturdaten berechnet, oder indem er ausgestrahlte Navigationsnachrichten oder ausgestrahlte Pages des Satellitensignals decodiert. Der Empfänger RX speichert diese Datensätze in Transaktionen und erzeugt auf analoge Weise zu Fig. 1 den sicherheitsgeschützten Satellitennavigationsdatensatz und stellt diesen anderen Knoten bereit.

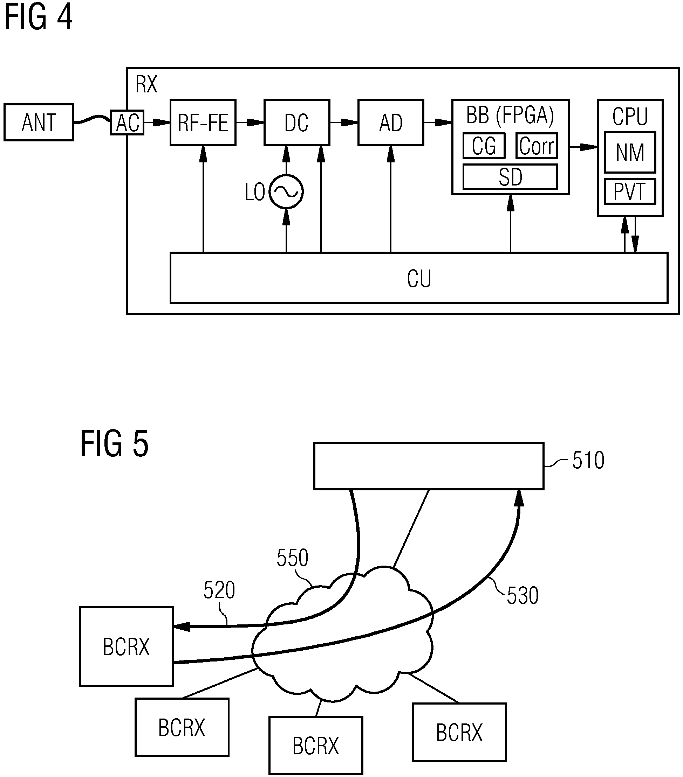

Die Fig. 4 zeigt ein viertes Ausführungsbeispiel der Erfindung.

Im Einzelnen zeigt die Fig. 4 einen Empfänger RX aus Fig. 3, der das erfindungsgemäße Verfahren zum Bereitstellen von sicherheitsgeschützten Satellitennavigationsdatensätzen realisiert.

Die Fig. 4 zeigt insbesondere ein Blockschaltbild mit wesentlichen Funktionsblöcken des Empfängers RX, an den über eine Antennenbuchse AC (Antenna Connector) eine Antenne ANT angeschlossen werden kann (alternativ könnte auch eine interne Antenne vorgesehen sein). Das von der Antenne bereitgestellte Signal wird durch eine Hochfrequenzbaugruppe RF-FE (Radio Frequency Front End) bearbeitet (Filterung, Verstärkung), dann einem Down-Converter DC bereitgestellt, der das Signal mit einem Signal des Local Oscillator LO mischt (down conversion) und einem Analog-Digital-Wandler AD bereitstellt. Dieser stellt der Basisbandverarbeitung BB zumindest ein digitalisiertes Signal bereit (es können auch mehrere Signale bereitgestellt werden).

Innerhalb der Basisbandverarbeitung BB wird ein Spreiz-Code durch einen Codegenerator CG erzeugt und es erfolgt eine Korrelation durch einen Korrelator Corr mit dem digitalisierten Empfangssignal. Zusätzlich dekodiert ein Symbol Decoder SD der Basisbandverarbeitung BB Symbole im Sinne der Nachrichtenübertragung. Das ausgestrahlte Satellitensignal hat z. B. einen PRN-Code (Ranging Code), der für die Entfernungs-/Laufzeitmessung ausgewertet wird. Zusätzlich werden aber auch Nutzdaten übertragen: Dazu werden Symbole gebildet, die decodiert werden müssen, nach einer Fehlerkorrektur (z .B. Viterbi-Dekoder) liegt ein Bitstrom vor. Aus dem Bitstrom können dann die Navigationsnachrichten dekodiert werden. Dabei ist es möglich, dass aus dem Bitstrom zuerst sogenannte Pages, d.h. Datenblöcke einer bestimmen Größe gebildet werden, aus denen dann Navigationsnachrichten zusammengesetzt werden.

Hierdurch kann eine Laufzeitschätzung ermittelt werden, beispielsweise Pseudoranges, und einer Berechnungskomponente CPU bereitgestellt werden, die mittels eines NM Decoders NM und einer PVT-Einheit PVT einen der ersten Satellitennavigationsdatensätze berechnet. Die PVT-Einheit ermittelt aus dem Signal des Satelliten beispielsweise die Position, Geschwindigkeit und Zeit. Der "NM Decoder" dekodiert dabei Navigationsnachrichten (Navigation Message). Darin sind insbesondere die Satellitenbahndaten (Almanach, Ephemeris) einkodiert, die der Empfänger benötigt, um exakte Satellitenposition zu berechnen. Es können jedoch auch Statusdaten übertragen werden, z. B. ob ein Satellit defekt ist. All diese Daten, ein Teil der Daten oder eine erste Prüfsumme der Daten können dann in den Transaktionen gespeichert werden.

Der Empfänger RX wird von einer Steuerung CU (control unit) gesteuert. Diese konfiguriert auch die Baugruppen, z. B. um ein Frequenzband durch Änderung der Frequenz des Local Oszillators LO zu wählen, den Eingangs-Filter der Hochfrequenzbaugruppe RF-FE zu konfigurieren, um die Bandbreite und Abtastrate des Analog-Digital-Wandlers AD zu konfigurieren oder um ein Modulationsverfahren eine Basisbandverarbeitung BB auszuwählen. Die von der Berechnungskomponente CPU ermittelten Daten werden durch die Berechnungskomponente CPU der Steuerung CU bereitgestellt. Dort können sie z. B. weiterbearbeitet werden und auf einer Nutzerschnittstelle (nicht dargestellt) ausgegeben werden. Eine oder mehrere der Baugruppen können in einer nicht dargestellten Variante auch Statussignale der Steuerung CU bereitstellen. In einer konkreten Realisierung erfolgt die Basisbandverarbeitung BB typischerweise auf einem FPGA-Baustein und die Berechnungen der Berechnungskomponente CPU werden üblicherweise von einer Softwarekomponente realisiert, die die Berechnungskomponente CPU (z. B. einen Prozessor) für diese Berechnungen konfigurieren. Der Signalfluss und die Signalverarbeitung erfolgen dabei insbesondere kontinuierlich, d. h. es wird fortlaufend das Empfangssignal digitalisiert und bearbeitet.

Die Steuerung CU oder die Berechnungskomponente CPU realisieren dann die restlichen Verfahrensschritte des erfindungsgemäßen Verfahrens. Hierzu werden einer der sicherheitsgeschützten Navigationsdatensätze dadurch erzeugt, dass ein Glied für die Blockkette erstellt wird, wobei das Glied die Transaktionen umfasst und das Glied mit einem anderen Glied der Blockkette verkettet wird. (So wie dies beispielsweise in Fig. 1 und Fig. 2 erläutert wurde).

Die Fig. 5 zeigt ein fünftes Ausführungsbeispiel der Erfindung.

Im Einzelnen zeigt die Fig. 5 ein beispielhaftes System mit mehreren blockkettenbasierten Empfängern BCRX (also Knoten einer Blockkette). Zusätzlich umfasst das System einen blockkettenbasierten Datengeber/Referenz-Empfänger 510 (z. B. ein Knoten einer Blockkette, der insbesondere zusätzlich die Funktionalität der in Fig. 3 und 4 erläuterten Empfänger umfasst).

Die Empfänger BCRX und der Datengeber 510 sind miteinander mit einem Netzwerk 550 (z. B. über ein LAN, WAN oder das Internet) kommunikativ verbunden und realisieren eine Blockkette, in der sie Transaktionen abhängig von den empfangenen ersten Navigationsdatensätzen (z. B. Navigationsnachrichten und Überwachungsdaten (Monitoringdaten)) einstellen/einfügen. Dadurch ist die Information für andere blockkettenbasierte Empfänger(knoten) auswertbar.

Im dargestellten Beispiel wird beispielsweise eine erste Prüfsumme (z.B. ein SHA256-Hash-Wert) der empfangenen ersten Navigationsdatensätze über eine Transaktion 520 einer Blockkette durch den Datengeber 510 bereitgestellt. In einer anderen Transaktion 530 der Blockkette wird eine Überwachungsinformation bereitgestellt (z. B. zur Signalstärke des Empfangssignals, oder ob das Signal durch einen RAIMS-Integritätsalgorithmus als unplausibel abgewiesen wurde). Dies kann durch die Empfänger BCRX oder durch einen weiten Datengeber erfolgen, der analog zum Datengeber 510 realisiert ist.

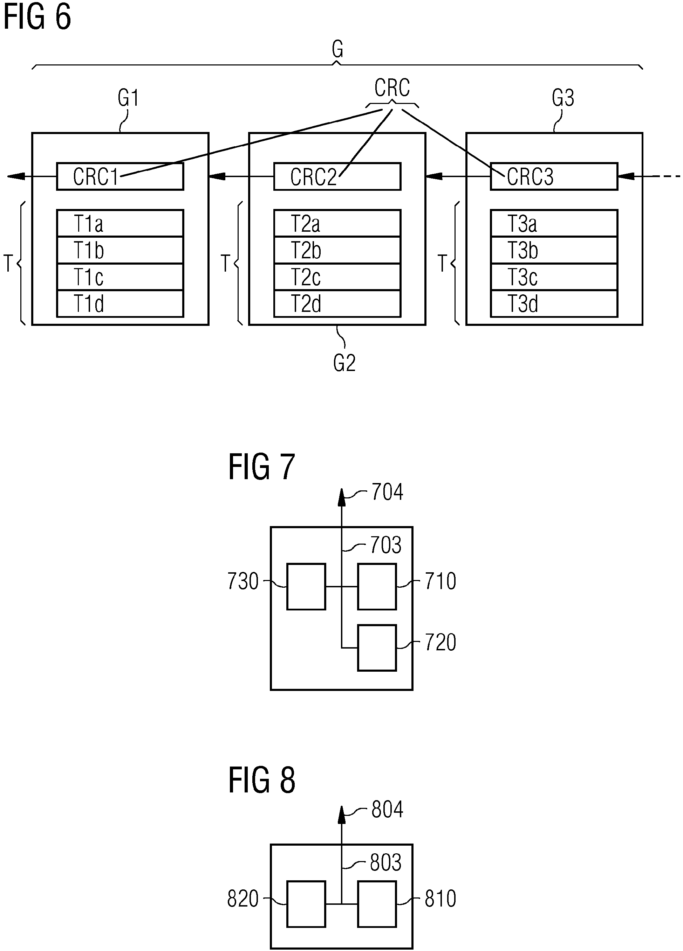

Die Fig. 6 zeigt ein sechstes Ausführungsbeispiel der Erfindung, das eine Blockkette darstellt, die zur Realisierung der vorhergehenden Ausführungsbeispiele geeignet ist.

Im Einzelnen zeigt die Fig. 6 die Glieder G, beispielsweise ein erstes Glied G1, ein zweites Glied G2 und ein drittes Glied G3, einer Blockkette.

Die Glieder G umfassen jeweils mehrere Transaktionen T. Das erste Glied G1 umfasst beispielsweise eine erste Transaktion T1a, eine zweite Transaktion T1b, eine dritte Transaktion T1c und eine vierte Transaktion T1d. Das zweite Glied G2 umfasst beispielsweise eine fünfte Transaktion T2a, eine sechste Transaktion T2b, eine siebte Transaktion T2c und eine achte Transaktion T2d. Das dritte Glied G3 umfasst beispielsweise eine neunte Transaktion T3a, eine zehnte Transaktion T3b, eine elfte Transaktion T3c und eine zwölfte Transaktion T3d.

Die Glieder G umfassen jeweils zusätzlich noch eine Verkettungsprüfsumme CRC, die abhängig vom direkten Vorgänger-Glied gebildet wird. Somit umfasst das erste Glied G1 eine erste Verkettungsprüfsumme CRC1 von seinem Vorgänger-Glied, das zweite Glied G2 eine zweite Verkettungsprüfsumme CRC2 vom ersten Glied G1, und das dritte Glied G3 eine dritte Verkettungsprüfsumme CRC3 vom zweiten Glied G2. Die Verkettungsprüfsumme wird vorzugsweise über den Glied-Header des entsprechenden Vorgängergliedes gebildet. Die Verkettungsprüfsumme CRC können vorzugsweise unter Verwendung einer kryptographischen Hash-Funktion wie z.B. SHA-256, KECCAK-256 oder SHA-3 gebildet werden.

Zusätzlich kann jedes der Glieder eine Transaktions-Prüfsumme umfassen. Diese kann mittels eines Hash-Baumes realisiert werden.

Um den Hash-Baum zu bilden, wird für jede Transaktion eines Gliedes eine dritte/weitere Prüfsumme (z. B. ebenfalls ein Hash-Wert, der abhängig von den Transaktionen/Transaktionsdatensätzen gebildet wird) berechnet. Üblicherweise wird ein Hash-Baum, z. B. ein Merkle Tree oder Patricia Tree, verwendet, dessen Wurzel-Hash-Wert/Wurzel-Prüfsumme vorzugsweise als Transaktions-Prüfsumme in dem jeweiligen Glied hinterlegt wird.

In einer Variante wird die Transaktions-Prüfsumme als Verkettungsprüfsumme verwendet.

Ein Glied kann weiterhin einen Zeitstempel, eine digitale Signatur, einen Proof-of-Work-Nachweis aufweisen, so wie es in den Ausführungsformen der Erfindung erläutert wurde.

Die sicherheitsgeschützten Satellitennavigationsdaten sind beispielsweise in den Transaktionen T gespeichert.

Die Fig. 7 zeigt ein siebtes Ausführungsbeispiel der Erfindung als Datengeber zum rechnergestützten Bereitstellen von sicherheitsgeschützten Satellitennavigationsdatensätzen. Bei der Vorrichtung kann es sich beispielsweise um einen Referenz-Empfänger wie in Fig. 5 handeln.

Der Datengeber umfasst ein Erfassungsmodul 710, ein Speichermodul 720, ein Erstellungsmodul 730 und eine optionale erste Kommunikationsschnittstelle 704 (z. B. zur Anbindung an das Netzwerk aus Fig. 5), die über einen ersten Bus 703 kommunikativ miteinander verbunden sind.

Die Vorrichtung kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 703 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das Erfassungsmodul 710 ist zum Erfassen von ersten Satellitennavigationsdatensätzen von der einem oder der mehreren Datenquellen eingerichtet.

Das Erfassungsmodul 710 kann beispielsweise mittels des Prozessors, der Speichereinheit und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die ersten Satellitennavigationsdatensätze erfasst werden.

Das Speichermodul 720 ist zum Speichern von Transaktionen eingerichtet, wobei
- die Transaktionen die ersten Satellitennavigationsdatensätze umfassen und/oder
- erste Prüfsummen für die ersten Satellitennavigationsdatensätze berechnet werden und die Transaktionen die ersten Prüfsummen umfassen.

Das Speichermodul 720 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Transaktionen gespeichert werden.

Das Erstellungsmodul 730 ist zum Erstellen der sicherheitsgeschützten Satellitennavigationsdatensätze durch ein Erzeugen von Gliedern einer Blockkette eingerichtet, wobei die Glieder jeweils mindestens eine der Transaktionen umfassen und die Glieder miteinander zu der Blockkette verkettet werden.

Das Erstellungsmodul 730 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass der sicherheitsgeschützte digitale Zwilling erstellt wird.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

Die Fig. 8 zeigt ein achtes Ausführungsbeispiel der Erfindung als Vorrichtung zum rechnergestützten Ermitteln einer Position. Bei der Vorrichtung kann es sich beispielsweise um einen Empfänger wie in Fig. 5 handeln.

Die Vorrichtung umfasst ein Kommunikationsmodul 810, ein Ermittlungsmodul 820 und eine optionale zweite Kommunikationsschnittstelle 804 (z. B. zur Anbindung an das Netzwerk aus Fig. 5), die über einen zweiten Bus 803 kommunikativ miteinander verbunden sind.

Die Vorrichtung kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den zweiten Bus 803 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das Kommunikationsmodul 810 ist zum Empfangen oder Abrufen mindestens eines sicherheitsgeschützten Satellitennavigationsdatensatzes nach einem der Ansprüche 1-8 (also das erfindungsgemäße Verfahren zum Bereitstellen sicherheitsgeschützter Satellitennavigationsdatensätze oder eine seiner Ausführungsformen) eingerichtet, wobei das Glied einer Blockkette eine Transaktion umfasst, welche den sicherheitsgeschützte Satellitennavigationsdatensatz aufweist.

Das Kommunikationsmodul 810 kann beispielsweise mittels des Prozessors, der Speichereinheit und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die sicherheitsgeschützten Satellitennavigationsdatensätze bereitgestellt werden.

Das Ermittlungsmodul 820 ist zum Ermitteln der Position anhand des sicherheitsgeschützten Satellitennavigationsdatensatzes eingerichtet.

Das Ermittlungsmodul 820 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Position ermittelt wird.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001

## Patentansprüche

1. Verfahren zum rechnergestützten Bereitstellen von sicherheitsgeschützten Satellitennavigationsdatensätzen mit folgenden Verfahrensschritten:
- Erfassen (110) von ersten Satellitennavigationsdatensätzen von einer oder mehreren Datenquellen;
- Speichern (120) von Transaktionen, wobei
- die Transaktionen die ersten Satellitennavigationsdatensätze umfassen und/oder
- erste Prüfsummen für die ersten Satellitennavigationsdatensätze berechnet werden und die Transaktionen die ersten Prüfsummen umfassen;
- Erstellen (130) der sicherheitsgeschützten Satellitennavigationsdatensätze durch ein Erzeugen von Gliedern einer Blockkette, wobei
- die Glieder jeweils mindestens eine der Transaktionen umfassen,
- die Glieder miteinander zu der Blockkette verkettet werden.

2. Verfahren nach Anspruch 1, wobei die Glieder über eine kryptographische Hashfunktion (H) miteinander verkettet werden.

3. Verfahren nach Anspruch 1 oder 2, wobei die sicherheitsgeschützten Satellitennavigationsdatensätze von einem oder mehreren Knoten bereitgestellt werden.

4. Verfahren nach Anspruch 3, wobei die sicherheitsgeschützten Satellitennavigationsdatensätze über das Internet, ein Mobilfunknetz, als ein Satellitensignal, einem Broadcastnetzwerk, einem Multicastnetzwerk, mittels einem Broadcastprotokoll, einem Multicastprotokoll oder einer Kombination davon übermittelt werden.

5. Verfahren nach Anspruch 3 oder 4, wobei der eine oder die mehreren Knoten oder ein Teil der mehreren Knoten, vertrauenswürdige Knoten sind.

6. Verfahren nach einem der vorhergehenden Ansprüche, wobei die sicherheitsgeschützten Satellitennavigationsdatensätze an mindestens einem Empfänger übermittelt werden.

7. Verfahren nach Anspruch 6, wobei der Empfänger abhängig von den empfangenen sicherheitsgeschützten Satellitennavigationsdatensätzen eine Positionsinformation und/oder eine Statusinformation ermittelt.

8. Verfahren nach einem der vorhergehenden Ansprüche, wobei die sicherheitsgeschützten Satellitennavigationsdatensätze innerhalb eines vorgegebenen Zeitintervalls oder entsprechend eines vorgegebenen Zeitrasters bereitgestellt werden.

9. Verfahren zum rechnergestützten Ermitteln einer Position mit den Verfahrensschritten:
- Empfangen (210) oder Abrufen mindestens eines sicherheitsgeschützten Satellitennavigationsdatensatzes nach einem der Ansprüche 1-8, wobei das Glied einer Blockkette eine Transaktion umfasst, welche den sicherheitsgeschützte Satellitennavigationsdatensatz aufweist;
- Ermitteln (220) der Position anhand des sicherheitsgeschützten Satellitennavigationsdatensatzes.

10. Datengeber zum rechnergestützten Bereitstellen von sicherheitsgeschützten Satellitennavigationsdatensätzen aufweisend:
- eine oder mehrere Datenquellen;
- ein Erfassungsmodul (710) zum Erfassen von ersten Satellitennavigationsdatensätzen von der einen oder der mehreren Datenquellen;
- ein Speichermodul (720) zum Speichern von Transaktionen, wobei
- die Transaktionen die ersten Satellitennavigationsdatensätze umfassen und/oder
- erste Prüfsummen für die ersten Satellitennavigationsdatensätze berechnet werden und die Transaktionen die ersten Prüfsummen umfassen;
- ein Erstellungsmodul (730) zum Erstellen der sicherheitsgeschützten Satellitennavigationsdatensätze durch ein Erzeugen von Gliedern einer Blockkette, wobei
- die Glieder jeweils mindestens eine der Transaktionen umfassen,
- die Glieder miteinander zu der Blockkette verkettet werden.

11. Datengeber nach Anspruch 10, wobei der Datengeber ein Übermittlungsmodul zum Übermitteln der sicherheitsgeschützten Satellitennavigationsdatensätze aufweist.

12. Vorrichtung zum rechnergestützten Ermitteln einer Position aufweisend:
- ein Kommunikationsmodul (810) zum Empfangen oder Abrufen mindestens eines sicherheitsgeschützten Satellitennavigationsdatensatzes nach einem der Ansprüche 1-8, wobei das Glied einer Blockkette eine Transaktion umfasst, welche den sicherheitsgeschützten Satellitennavigationsdatensatz aufweist;
- ein Ermittlungsmodul (820) zum Ermitteln der Position anhand des sicherheitsgeschützten Satellitennavigationsdatensatzes.

13. Computerprogrammprodukt mit Programmbefehlen zur Durchführung der Verfahren nach einem der Ansprüche 1 - 8 und/oder Anspruch 9.

14. Computerprogrammprodukt mit Programmbefehlen für ein Erstellungsgerät, das mittels der Programmbefehle konfiguriert wird, den Datengeber nach Anspruch 10 oder 11 oder die Vorrichtung nach Anspruch 12 zu erstellen.

15. Bereitstellungsvorrichtung für das Computerprogrammprodukt nach Anspruch 13 und/oder 14, wobei die Bereitstellungsvorrichtung das Computerprogrammprodukt speichert und/oder bereitstellt.
